(19) Europäisches Patentamt
European Patent Office
Office européen des brevets

(11) **EP 3 885 314 B1**

(12) **EUROPEAN PATENT SPECIFICATION**

(45) Date of publication and mention
of the grant of the patent:
**08.03.2023 Bulletin 2023/10**

(21) Application number: **20382225.9**

(22) Date of filing: **25.03.2020**

(51) International Patent Classification (IPC):
**C01B 32/15** [(2017.01)]    **C01B 32/25** [(2017.01)]

(52) Cooperative Patent Classification (CPC):
**C01B 32/25; C01B 32/15**

(54) **METHOD FOR THE PRODUCTION OF POLYCRYSTALLINE NANODIAMONDS FROM GRAPHITE**

VERFAHREN ZUR HERSTELLUNG VON POLYKRISTALLINEN NANODIAMANTEN AUS GRAPHIT

PROCÉDÉ POUR LA PRODUCTION DE NANODIAMANTS POLYCRISTALLINS À PARTIR DE GRAPHITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.09.2021 Bulletin 2021/39**

(73) Proprietor: **Gomez de Castro, Ana Inés**
**28660 Madrid (ES)**

(72) Inventor: **Gomez de Castro, Ana Inés**
**28660 Madrid (ES)**

(74) Representative: **Del Valle Valiente, Sonia**
**C/ Miguel Angel Cantero Oliva, 5,53**
**28660 Boadilla del Monte-Madrid (ES)**

(56) References cited:
**RU-C1- 2 685 665    US-B1- 6 315 871**

- **ROY SOUMYENDU ET AL: "Fast growth of nanodiamond in a microwave oven under atmospheric conditions", JOURNAL OF MATERIALS SCIENCE, KLUWER ACADEMIC PUBLISHERS, DORDRECHT, vol. 55, no. 2, 26 August 2019 (2019-08-26), pages 535-544, XP036909959, ISSN: 0022-2461, DOI: 10.1007/S10853-019-03936-4 [retrieved on 2019-08-26]**
- **VELARDI L ET AL: "Comparative photoemission study between nanocrystalline diamond films and nanodiamond layers", CONFERENCE: IV WORKSHOP PLASMI, SORGENTI, BIOFISICA ED APPLICAZIONI ; UNIVERSITA DEL SALENTO, LECCE; 17-18 OTTOBRE 2014, ESE, 3 June 2015 (2015-06-03), pages 77-81, XP002757587, DOI: 10.1285/I9788883051081P77 ISBN: 978-88-8305-107-4**
- **VELARDI LUCIANO ET AL: "UV photocathodes based on nanodiamond particles: Effect of carbon hybridization on the efficiency", DIAMOND AND RELATED MATERIALS, ELSEVIER SCIENCE PUBLISHERS, AMSTERDAM, NL, vol. 76, 30 March 2017 (2017-03-30), pages 1-8, XP085043200, ISSN: 0925-9635, DOI: 10.1016/J.DIAMOND.2017.03.017**

## Description

### OBJECT OF THE INVENTION

The present invention generally belongs to the field of the synthetic production of nanodiamonds.

The object of the present invention is a procedure for the synthetic production of polycrystalline nanodiamonds from graphite by the method of claim 1.

### PRIOR ART

Nanodiamonds, that is, diamonds having a size between about 1-1000 nm, are demanded for many applications from abrasives to optical elements and coatings. They are also used in electronics and optronics for its unique capabilities: wide gap semiconductor, high conductivity, low sensitivity to temperature.

Diamonds occur in nature from carbon containing minerals due to extreme pressure and temperature conditions deep into the Earth's mantle. Volcanic eruptions subsequently transport diamonds near the surface. This natural process can take up to millions of years. However, there exist a number of artificial methods for the synthetic production of nanodiamonds.

A known method for the synthetic production of diamonds consists of submitting carbon-rich materials to high pressure and high temperatures [1]. Vapour deposition techniques for the diamond crystal formation are also known [2]. A method for producing diamonds based on triggering the transition from graphite to diamond by the detonation of carbon-containing explosives was also proposed [3, 4]. High power ultrasounds can also be employed for this purpose [5]. Finally, ultrafast multiphoton thermionic photoirradiation with lasers is also known to accelerate the diamond generation process [6].

Document US6315871 discloses a method for producing diamonds is provided comprising exposing carbonaceous material to ion irradiation at ambient temperature and pressure.

Velardi "Comparative photoemission study between nanocrystalline diamond films and nanodiamond layers", October 2014, Conference: IV Workshop Plasmi Sorgenti Biofisica ed Applicazioni, discloses a study on photoemission of nanocrystalline diamond film and nanodiamond layers obtained by microwave plasma enhanced CVD and pulsed spray technique. Velardi:"UV photocathodes based on nanodiamond particles: Effect of carbon hybridization on the efficiency", March 2017, Diamond and Related Materials 76:1-8, discloses the effect of carbon hybridization on the efficiency of UV photocathodes based on nanodiamond particles.

However, there still exists a need in the art for a simpler and more economic method for the synthetic production of nanodiamonds.

## DESCRIPTION OF THE INVENTION

The photoelectric process consists in the emission of electrons when a material is irradiated by light [7]. Photons with energies above 5 eV are required to induce this effect in graphite [8,9]. It is foreseen that the structural faults, induced by the associated electron loss, submit the graphite to structural stress, promoting the carbon $sp^2$ hybridization (graphite) into the $sp^3$ hybridization (diamond).

Based on the above theory, the inventor of the present invention carried out a research process. The result of said research process is the method of the present invention for the production of nanodiamonds based on irradiating a carbon-rich material, such as graphite, with ultraviolet radiation. This new paradigm provides for a much simpler and economic method in comparison with the abovementioned prior art processes for the production of nanodiamonds inclusions and nanodiamond patterns on the surface of graphitic materials.

The method for the production of polycrystalline nanodiamonds from graphite thus comprises the following steps:

a. Submitting a graphitic material to vacuum.

The base material for the production of diamonds, i.e. graphite, is first submitted to vacuum. A conventional vacuum chamber can be used for this purpose.

Within the Earth, ultraviolet radiation is absorbed by the Oxigen ($O_2$) in the air. The absorption cross-section is about $3\times10^{-19}$ cm$^2$ for the photons within the energy range of interest. The number density of molecules in the air is $2.69\times10^{19}$ molecules/cm$^3$, at pressure 1 atmosphere and temperature 20 C; 21% of these molecules are Oxigen ($O_2$). Hence photons produced by the UV source are totally absorbed in 6 mm.

The efficiency of the method depends on maximizing the number of UV photons reaching the graphitic sample, for a given electric power consumed by the ultraviolet lamp. The number of ultraviolet photons reaching the sample depends on the air pressure. The total absorbance is:

$$A(cm^{-1}) = 0.6\frac{P(Pa)}{101325\,Pa}$$

and the fraction of the energy reaching a sample at 10 cm from the lamp is given by:

$$\frac{I}{I_0} = e^{-10A}$$

Therefore, for 99.9% of the lamp UV photons to reach the sample, a pressure smaller than 1 Pa is required. The sample has therefore been irradiated in vacuum.

Further, the inventor found that a working air pressure within the vacuum chamber below $10^{-1}$ Pa is required to minimize the collisions between the photoelectrons and the molecules and favour the formation of an electron sheath around the sample that accelerates the process.

b. Irradiating the graphitic material under vacuum with ultraviolet radiation.

Once under vacuum according to the above conditions, the graphitic material is irradiated with ultraviolet radiation. A conventional Deuterium lamp can be used as ultraviolet light source, but any source irradiating at energies above 5 eV suffices.

The ultraviolet photons remove electrons from graphite by the photoelectric effect, creating a sheath of charged plasma around the material. The graphitic layers are stressed and dislocated by this effect. These shifts cause the transition from hybridization $sp^2$, to lonsdaleite and hybridization $sp^3$ (diamond) causing the generation of microdiamonds especially, in areas of the graphitic structure with faults where the hexagonal graphitic layers are already stressed.

The inventor found this effect irradiating the sample with a Deuterium lamp with energy coverage 5 to 11.2 eV.

The above method thus allows for the generation of microdiamonds in a simple, economic and fast manner. Further, the above method allows for the selection of the grain size distribution of nanodiamonds between a few nanometers to about 100 nanometers by controlling the time the sample is exposed to the radiation field and the size of the irradiated area. Optical means such as interferometric filters or pin holed plates can be used for this purpose. Alternatively, excimer lasers working at the relevant wavelengths ($Xe_2$, $F_2$, $Kr_2$, $Ar_2$) are suitable for this purpose.
The method of the invention can further comprise the step selecting the area to be irradiated, e.g. laying a mask over the graphitic material prior to irradiating with ultraviolet radiation for blocking the ultraviolet radiation in non-desired areas of the graphitic material.
Selection of the irradiated area allows for the integration of semiconducting microdiamond areas into graphite based conducting substrates. Cheap, wide gap semiconductors can be integrated in a circuit by this method.

**BRIEF DESCRIPTION OF THE FIGURES**

Fig. 1. A schematic diagram of a basic set up for the procedure.

Fig. 2 shows the effect of ultraviolet radiation on a sample of highly oriented pyrolytic graphite.

**PREFERRED EMBODIMENT OF THE INVENTION**

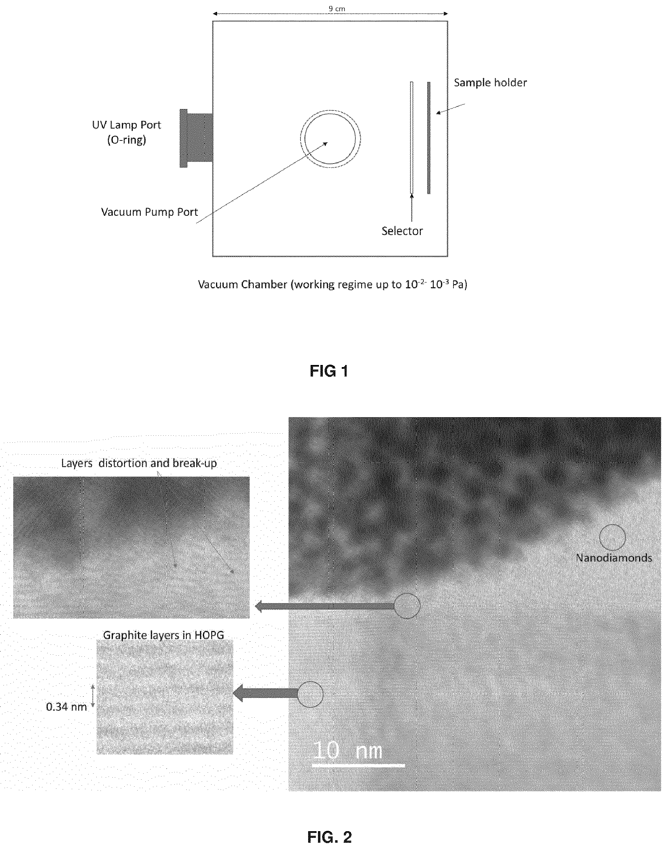

Fig. 1 shows a diagram of the invention. First, the graphite sample is placed in the holder within the vacuum chamber: the sample is positioned perpendicularly to the light beam to optimize the effect of the UV radiation field. The plate at front can be used to select the area to be irradiated. After the chamber is closed, the pump is set to work up to reaching to pressures of $10^{-1}$ Pa or less. Finally, the UV lamp is turned on. The number of nanodiamonds formed increase with the exposure time. It takes 6 hours to cover with nanodiamonds the surface of a graphite fibre irradiated with a flux of $130 \times 10^{12}$ photons/s/cm$^2$/str with energies in the 5 - 11.2 eV range; this flux is equivalent to the produced by a standard, commercial Deuterium lamp.
Fig. 2 shows the effect of ultraviolet radiation on a graphite. To illustrate best the effect a sample of Highly Oriented Pyrolytic Graphite (HOPG) is used. As shown in the figure, the separation between graphitic layers is clearly seen (0.34 nm). The sample was irradiated from the top. UV irradiation destroy the layered distribution of the HOPG. In some areas, lonsdaleite type defects are observed. Diamonds are formed on the surface.

**REFERENCES**

[1] Abbaschian, Reza; Zhu, Henry; Clarke, Carter (2005). "High pressure-high temperature growth of diamond crystals using split sphere apparatus". Diam. Rel. Mater. 14 (11-12): 1916-1919. Bibcode:2005 DRM....14.1916A. doi:10.1016/j.diamond.2005.09.007

[2] Angus, John C.; Will, Herbert A.; Stanko, Wayne S. (1968). "Growth of Diamond Seed Crystals by Vapor Deposition". J. Appl. Phys. 39 (6): 2915. Bibcode:1968JAP....39.2915A. doi:10.1063/1.1656693.

[3] Iakoubovskii, K.; Baidakova, M.V.; Wouters, B.H.;

Stesmans, A.; Adriaenssens, G.J.; Vul', A.Ya.; Grobet, P.J. (2000). "Structure and defects of detonation synthesis nanodiamond". Diamond and Related Materials. 9 (3-6): 861.

[4] Iakoubovskii, K; Mitsuishi, K; Furuya, K (2008). "High-resolution electron microscopy of detonation nanodiamond". Nanotechnology. 19 (15): 155705. Bibcode:2008Nanot..19o5705I

[5] Galimov, É. M.; Kudin, A. M.; Skorobogatskii, V. N.; Plotnichenko, V. G.; Bondarev, O. L.; Zarubin, B. G.; Strazdovskii, V. V.; Aronin, A. S.; Fisenko, A. V.; Bykov, I. V.; Barinov, A. Yu. (2004). "Experimental Corroboration of the Synthesis of Diamond in the Cavitation Process". Doklady Physics. 49 (3): 150-153. Bibcode:2004 DokPh..49..150G. doi:10.1134/1.1710678.

[6] Shijing Tan, Adam Argondizzo, Cong Wang, Xuefeng Cui, and Hrvoje Petek (2017) Physical Review X, 7, 01 1004, 2017

[7] Hertz, Heinrich (1887). "Ueber einen Einfluss des ultravioletten Lichtes auf die electrische Entladung". Annalen der Physik. 267: 983-1000.

[8] Feuerbacher, B., and Fitton, B. (1972). Journal of Applied Physics, 43, 1563

[9] Weingartner, J., Draine, B., (2001), Astrophysical Journal Supplement Series, 134, 263.

## Claims

1. Method for the production of polycrystalline nanodiamonds from graphite, **characterized by** comprising the following steps:

   a. submitting a graphitic material to a vacuum below 0.1 Pa; and
   b. irradiating the graphitic material under vacuum with ultraviolet radiation having an energy above 5 eV.

2. Method for the production of polycrystalline nanodiamonds according to claim 1, further comprising the step of laying a mask over the graphitic material prior to irradiating with ultraviolet radiation for blocking the ultraviolet radiation in non-desired areas of the graphite material.

## Patentansprüche

1. Verfahren zur Herstellung polykristalliner Nanodiamanten aus Graphit, **dadurch gekennzeichnet, dass** es die folgenden Schritte umfasst:

   a. Unterwerfen eines graphitischen Materials einem Vakuum unter 0,1 Pa; und
   b. Bestrahlen des graphitischen Materials unter Vakuum mit ultravioletter Strahlung mit einer Energie über 5 eV.

2. Verfahren zur Herstellung von polykristallinen Nanodiamanten nach Anspruch 1, ferner umfassend den Schritt des Auflegens einer Maske über das graphitische Material vor dem Bestrahlen mit ultravioletter Strahlung zum Blockieren der ultravioletten Strahlung in unerwünschten Bereichen des graphitischen Materials.

## Revendications

1. Procédé de production de nanodiamants polycristallins à partir de graphite, **caractérisé en ce qu'**il comprend les étapes suivantes :

   a. la soumission d'un matériau graphitique à un vide au-dessous de 0,1 Pa ; et
   b. l'irradiation du matériau graphitique sous vide avec un rayonnement ultraviolet ayant une énergie au-dessus de 5 eV.

2. Procédé de production de nanodiamants polycristallins selon la revendication 1, comprenant en outre l'étape consistant à poser un masque sur le matériau graphitique avant l'irradiation avec un rayonnement ultraviolet pour bloquer le rayonnement ultraviolet dans des zones non souhaitées du matériau en graphite.

Vacuum Chamber (working regime up to $10^{-2}$ $10^{-3}$ Pa)

**FIG 1**

**FIG. 2**

**EP 3 885 314 B1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6315871 B

### Non-patent literature cited in the description

- **VELARDI.** Comparative photoemission study between nanocrystalline diamond films and nanodiamond layers. *Conference: IV Workshop Plasmi Sorgenti Biofisica ed Applicazioni,* October 2014
- **VELARDI.** UV photocathodes based on nanodiamond particles: Effect of carbon hybridization on the efficiency. *Diamond and Related Materials,* March 2017, vol. 76, 1-8
- **ABBASCHIAN, REZA ; ZHU, HENRY ; CLARKE ; CARTER.** High pressure-high temperature growth of diamond crystals using split sphere apparatus. *Diam. Rel. Mater.,* 2005, vol. 14 (11-12), 1916-1919
- **ANGUS, JOHN C ; WILL, HERBERT A. ; STANKO, WAYNE S.** Growth of Diamond Seed Crystals by Vapor Deposition. *J. Appl. Phys.,* 1968, vol. 39 (6), 2915
- **LAKOUBOVSKII, K. ; BAIDAKOVA, M.V. ; WOUTERS, B.H. ; STESMANS, A. ; ADRIAENSSENS, G.J. ; VUL', A.YA. ; GROBET, P.J.** Structure and defects of detonation synthesis nanodiamond. *Diamond and Related Materials.,* 2000, vol. 9 (3-6), 861
- **LAKOUBOVSKII, K ; MITSUISHI, K ; FURUYA, K.** High-resolution electron microscopy of detonation nanodiamond. *Nanotechnology,* 2008, vol. 19 (15), 155705
- **GALIMOV, É. M. ; KUDIN, A. M. ; SKOROBOGATSKII, V. N. ; PLOTNICHENKO, V. G. ; BONDAREV, O. L ; ZARUBIN, B. G. ; STRAZDOVSKII, V. V. ; ARONIN, A. S. ; FISENKO, A. V.; ; BYKOV, I. V.** Experimental Corroboration of the Synthesis of Diamond in the Cavitation Process. *Doklady Physics.,* 2004, vol. 49 (3), 150-153
- **SHIJING TAN ; ADAM ARGONDIZZO ; CONG WANG ; XUEFENG CUI ; HRVOJE PETEK.** *Physical Review X,* 2017, vol. 7 (01), 1004
- **HERTZ, HEINRICH.** Ueber einen Einfluss des ultravioletten Lichtes auf die electrische Entladung. *Annalen der Physik.,* 1887, vol. 267, 983-1000
- **FEUERBACHER, B. ; FITTON, B.** *Journal of Applied Physics,* 1972, vol. 43, 1563
- **WEINGARTNER, J. ; DRAINE, B.** *Astrophysical Journal Supplement Series,* 2001, vol. 134, 263